# EUROPÄISCHE PATENTSCHRIFT

(11) **EP 1 184 812 B1**
(45) Veröffentlichungstag und Bekanntmachung des Hinweises auf die Patenterteilung: **31.07.2002**
(21) Anmeldenummer: 00118236.9
(22) Anmeldetag: 01.09.2000
(51) Int. Cl.: G06T 17/20

(54) **Stufenfreie Darstellung von zwei- oder dreidimensionalen Datensätzen durch krümmungsminimierende Verschiebung von Pixelwerten**
Antialiasing representation of two- or three-dimensional data sets through curvature minimizing shift of pixel values
Représentation anti-crénelage de données en deux ou trois dimensions avec déplacement de valeurs de pixels, minimisant la courbure

(43) Veröffentlichungstag der Anmeldung: 06.03.2002
(73) Patentinhaber: BrainLAB AG, 85551 Kirchheim/Heimstetten (DE)
(72) Erfinder: Hutter, Marcus, Dr., 80335 München (DE)
(74) Vertreter: Schwabe - Sandmair - Marx

(56) Entgegenhaltungen:
- US-A- 5 930 498
- GIBSON S F F: "Constrained elastic surface nets: generating smooth surfaces from binary segmented data" MEDICAL IMAGE COMPUTING AND COMPUTER-ASSISTED INTERVENTION - MICCAI'98. FIRST INTERNATIONAL CONFERENCE. PROCEEDINGS, MEDICAL IMAGE COMPUTING AND COMPUTER-ASSISTED INTERVENTION - MICCAI'98. FIRST INTERNATIONAL CONFERENCE. PROCEEDINGS, CAMBRIDGE, MA, U, Seiten 888-898, XP000965032 1998, Berlin, Germany, Springer-Verlag, Germany ISBN: 3-540-65136-5

## Beschreibung

Die vorliegende Erfindung bezieht sich auf eine Vorrichtung und ein Verfahren zur Auswertung und Darstellung von zwei- oder dreidimensionalen Datensätzen oder Objekten, auf ein Computerprogrammprodukt, welches Codeabschnitte umfasst, mit denen das Verfahren ausgeführt werden kann, sowie die Verwendung des Verfahrens.

In verschiedenen technischen Bereichen ist es wünschenswert die räumliche Struktur von dreidimensionalen Objekten zu erfassen. Insbesondere bei medizinischen Untersuchungen oder zur Vorbereitung von chirurgischen Eingriffen, als auch zum Beispiel zur präzisen Steuerung der Bestrahlung eines Tumors ist es wünschenswert die Struktur von dreidimensionalen Objekten, wie zum Beispiel Zellgewebe oder Knochen möglichst genau zu erfassen und den dreidimensionalen Datensatz abzubilden oder in Form von zweidimensionalen Schnittbildern darzustellen. Dabei werden durch bekannte Verfahren, wie zum Beispiel Computertomographie oder Kernspinresonanz mehrere parallel zueinander liegende Schnittebenen des zu untersuchenden dreidimensionalen Körpers aufgenommen, wobei aus dieser Serie von zweidimensionalen Bildern auch Daten zur Darstellung von Bildern in Schnittebenen ermittelt werden, welche nicht parallel zu den Aufnahmeebenen liegen. Wenn zum Beispiel ein Schnittbild des dreidimensionalen Körpers dargestellt werden soll, welches in einer Ebene liegt, die senkrecht auf den Aufnahmeebenen steht, stehen nur diskrete Werte als Pixel zur Verfügung, um diescs Schnittbild zu erzeugen. Beträgt der Abstand der Aufnahmeebenen zum Beispiel D, so stehen zur Erzeugung eines Schnittbildes in einer senkrecht zu den Aufnahmeebenen liegenden Ebene nur Pixel auf parallel zueinander liegenden Linien zur Verfügung, welche den Abstand D aufweisen. Um Farb- bzw. Grauwerte der dazwischen liegenden Pixel zu ermitteln, werden Interpolationsverfahren angewandt, welche jedoch häufig nicht zufriedenstellende Ergebnisse liefern.

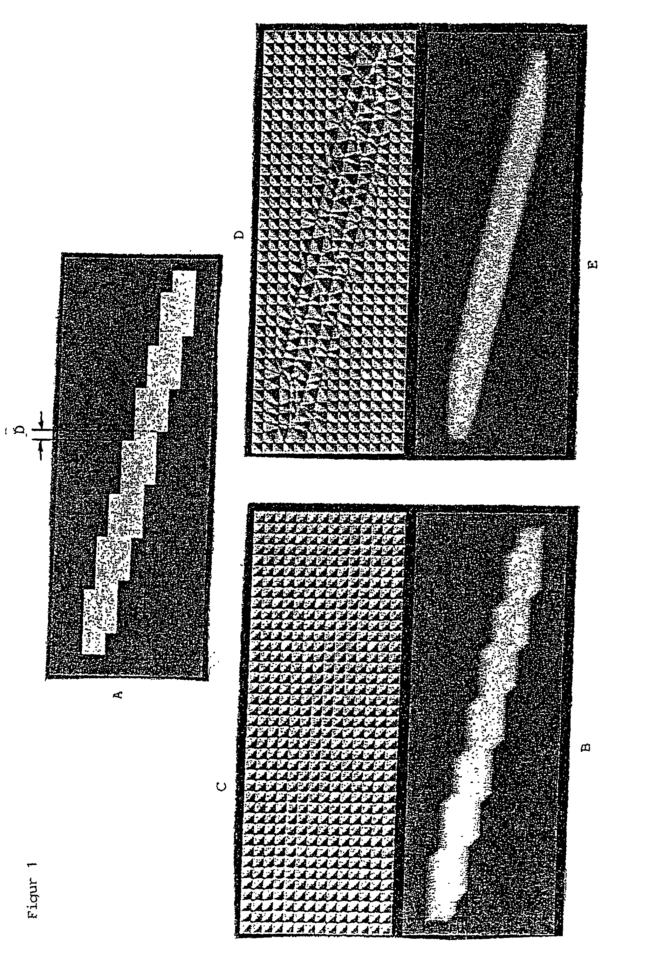

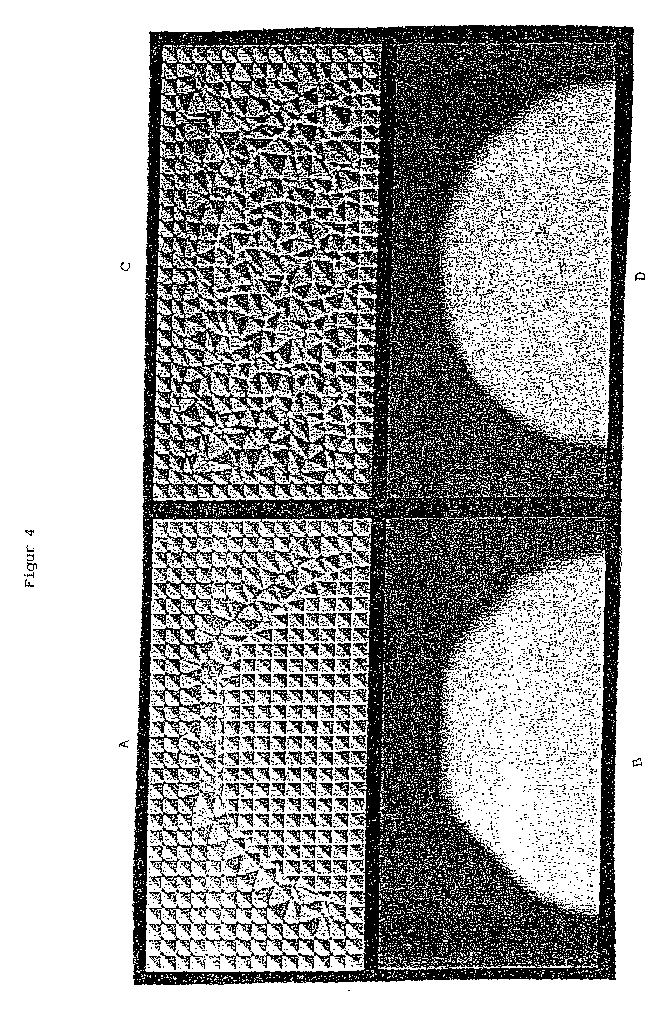

Figur 1A zeigt ein Bild einer zweidimensionalen geneigten Linie, welches Bilddatenwerte nur an diskreten Stützstellen aufweist. Dies führt zu der gezeigten der Realität nicht entsprechenden Stufenform der Linie bzw. des Objekts im Bild. Bekannte Bildinterpolationsverfahren führen eine lokale Interpolation der Pixel durch, was zum Beispiel zu dem in Figur 1B gezeigten Bild führt. Auch dieses Bild lässt die durch die nur an diskreten Stellen zur Verfügung stehenden Bilddatenwerte erzeugten Stufen des Körpers noch erkennen. Bekannte Antialiasingverfahren führen zwar zu einer verbesserten Darstellung, wie z. B. in Figur 4B gezeigt, diese sind jedoch nur anwendbar, wenn eine analytische Beschreibung der Objekte vorliegen würde. Dies ist jedoch bei durch Messung gewonnenen Daten nicht der Fall.

Gibson S.F.F.: "Constrained elastic surface nets: generating smooth surfaces from binary segmented data", Medical Image Computing and Computer-Assisted Intervention - MICCAI'98. First Int. Conf. Proc., Cambridge, MA, USA, Seiten 888 bis 898, 1998, Berlin, Deutschland, Springer Verlag, Deutschland beschreibt ein Verfahren zur Erzeugung von Objektoberflächen aus binär-segmentierten Daten, wobei ein Netz von verknüpften Oberflächenknoten über der Oberfläche des binären Objektes erzeugt wird und die Positionen der Knoten iterativ so festgelegt werden, um die Energie des Oberflächennetzes zu verringern, wobei die Einschränkung erfüllt wird, dass jedes Element in dem Oberflächennetz innerhalb seines ursprünglichen Oberflächenwürfels bleiben muss.

Es ist die Aufgabe der vorliegenden Erfindung ein Verfahren und eine Vorrichtung vorzuschlagen, mit welchen die Auswertung und Darstellung von zwei- und dreidimensionalen Datensätzen verbessert werden kann.

Diese Aufgabe wird durch ein Verfahren und eine Vorrichtung gemäß den unabhängigen Ansprüchen gelöst.

Vorteilhafte Ausführungsformen ergeben sich aus den Unteransprüchen.

Gemäß einem ersten Aspekt der Erfindung wird von zweidimensionalen Aufnahmen eines zwei- oder dreidimensionalen Körpers, welche zum Beispiel mittels Ultraschall-, Computertomographie- oder Kernspinresonanz-Verfahren gewonnen wurden, ausgegangen.

Es wird ein erstes zweidimensionales kontinuierliches Datenmodell der Aufnahmen erzeugt, indem aus benachbarten Pixeln Flächenelemente gebildet werden, welche geeignet unterteilt werden können; z. B. wird aus je vier aneinander grenzenden Pixeln ein Quadrat gebildet, welches z. B. nochmals in zwei oder mehr Dreiecke unterteilt werden kann. Jedoch ist die Erfindung nicht auf Dreiecke beschränkt. Allgemein können auch andere geeignete Flächenelemente verwendet werden. Den Eckpunkten der Dreiecke bzw. Flächenelemente werden die Farb- bzw. Grauwerte der Pixel der zweidimensionalen Aufnahme zugeordnet bzw. durch z. B. Interpolation gewonnene Zwischenwerte, falls die Eckpunkte nicht mit den Pixeln zusammenfallen. Farb- bzw. Grauwerte an beliebigen Zwischenwerten im Inneren der Dreiecke können nun z. B. durch lineare oder eine andere Interpolation gewonnen werden. Im Falle von grauwertigen Aufnahmen können die Grauwerte als reelle Funktionswerte und das interpolierte kontinuierliche bzw. Kontinuums-Modell als Höhenfläche interpretiert werden. Die Eckpunkte der Dreiecke können durch deren (x, y) Koordinaten, welche als Stützstellen dienen, und dem zugeordneten Farb- bzw. Grauwert bzw. einer z-Koordinate beschrieben werden. Die lineare Interpolation entspricht in dieser Interpretation einem Gouraud-Shading. Die Eckpunkte werden in der x-y-Ebene verschoben, um eine Glättung von Bildkanten zu erreichen und somit die Krümmung einer durch eine Farb- bzw. Grauwertverteilung definierten Fläche zu verringern bzw. zu minimieren. Somit werden z. B. die Stützstellen verschoben, wobei z. B. keine Farb- bzw. Grauwerte modifiziert werden müssen oder Zwischen-Stützstellen mit zu ermittelnden Farb- bzw. Grauwerten eingeführt werden müssen.

Es wird angemerkt, dass der Begriff "Krümmung" im Sinne der Erfindung nicht nur die mathematisch definierte Krümmung umfasst, sondern jede Art der Abweichung von einer linearen Struktur umfassen kann, d.h. z. B. die Abweichung einer Kurve von einer Geraden oder einer Fläche von einer Ebene. Folgende Operatoren werden zur Durchführung der Erfindung vorgeschlagen:
■ Der als *IsoMin* bezeichnete Operator ist definiert als Fläche der Projektion eines Flächenelements in Gradientenrichtung. Dabei wird der Flächeninhalt als Maß der Krümmung verwendet. Im dreidimensionalen Fall handelt es sich hierbei um die Projektion eines Volumenelements, z. B. eines Tetraeders, wobei das Volumen des projizierten Tetraeders als Maß der Krümmung verwendet wird.
■ Der als *IsoSmooth* bezeichnete Operator ist definiert als das mathematische Krümmungsquadrat orthogonal zur Gradientenrichtung.
■ Der als *GaussMin* bezeichnete Operator ist definiert als linearisiertes Produkt der Hauptkrümmungen, im zweidimensionalen Fall also das Produkt aus der stärksten und schwächsten Krümmung.

Gemäß einer Ausführungsform der Erfindung werden Stützstellen in der x-y-Ebene so verschoben, dass eine z. B. durch einen der oben genannten Operatoren definierte Gesamtkrümmung verringert oder minimiert wird. Nach erfolgter Verringerung bzw. Minimierung weist das so erhaltene Bild im Idealfall nicht mehr die stufenförmigen Linien des Ursprungsbildes auf, wie es bei Verfahren nach dem Stand der Technik der Fall ist. Es ist möglich, dass an denjenigen Stellen des nach Durchführung des erfindungsgemäßen Verfahrens ermittelten Bildes, an welchen Ursprungsdaten vorlagen, neue Bilddaten ermittelt werden, welche von den Ursprungsdaten verschieden sind, da nicht einfach zwischen diesen Ursprungsdaten interpoliert wurde, sondern diese Ursprungsdaten infolge des erfindungsgemäßen Verfahrens verschoben wurden, um das gewünschte Bild zu erzeugen. Es findet jedoch bevorzugt keine oder nur eine geringe Veränderung der Farb- bzw. Grauwerte der Ursprungsdaten statt.

Das durch das erfindungsgemäße Verfahren erzeugte zweidimensionale kontinuierliche Modell, welches aus einer Vielzahl von nun irregulären Dreiecken gebildet wird, ermöglicht es auf relativ einfache Weise den so erhaltenen Datensatz wieder in ein reguläres, zum Beispiel orthogonales Pixelbild umzuwandeln.

Betrachtet man ein zweidimensionales Bild mit diskreten Ursprungsdaten an bestimmten Stützstellen, wie zum Beispiel in Figur 1A gezeigt, wobei z. B. hellere Punkte des Bildes als höhere Punkte einer Fläche betrachtet werden können, so ist zum Beispiel in Figur 1A eine Grundfläche gezeigt, aus welcher sich ein hell dargestellter Körper konstanter Höhe erhebt, welcher einen stufenförmigen Umfang hat. Das Ergebnis der Ausführung des erfindungsgemäßen Verfahrens anhand dieses vereinfachten Beispiels wird in Abbildung Figur 1E gezeigt. Die Stufen des Körpers sind vollständig eliminiert.

Die erfindungsgemäß verwendeten Daten sind bevorzugt digitale Daten, welche maschinenlesbar oder in einem digitalen Speicher abgelegt sind.

Die im Ausgangsdatensatz vorliegenden diskreten Stützpunkte des zu ermittelnden zweidimensionalen Bildes werden bei der in Figur 1 gezeigten Ausführungsform als Eckpunkte von Dreiecken betrachtet, so dass die gesamte Bildfläche aus dreieckigen Bildelementen zusammengesetzt werden kann, wie zum Beispiel in Figur 1C gezeigt. Ein solches trianguliertes Bild kann als Ausgangsbild für das erfindungsgemäße Verfahren verwendet werden, wobei die Eckpunkte der Dreiecke so verschoben werden, dass eine durch obige Operatoren definierte Krümmung einer durch die Farb- bzw. Grauwertverteilung definierten Fläche verringert oder minimiert wird. Das so ermittelte Bild setzt sich aus Dreiecken zusammen, welche nicht mehr regulär angeordnet sind und eine andere Geometrie als in Figur 1C aufweisen. Bedingt durch die Verschiebung der jeweiligen Eckpunkte können die Dreiecke eine unterschiedliche Form aufweisen, wie in Figur 1D gezeigt. Punkten innerhalb der Dreiecke werden auch Farbbzw. Grauwerte zugeordnet. Dies kann zum Beispiel durch Gouraud-Shading erfolgen, wobei der Fläche des Dreiecks ein sich stetig verändernder Farb- bzw. Grauwert zugeordnet wird, welcher von den Farb- bzw. Grauwerten der Eckpunkte abhängt, so dass innerhalb der Dreiecksfläche die durch die Eckwerte definierten Farb- bzw. Grauwerte stetig ineinander übergehen. Aus diesen so schattierten Dreiecken kann dann das Endbild 1E ermittelt werden.

Bevorzugt wird bei dem erfindungsgemäßen Verfahren die Bedingung berücksichtigt, dass jeder Stützpunkt um maximal einen vorgegebenen Höchstwert verschoben werden kann, wie zum Beispiel um maximal ein halbes Pixel. Nach dem erfindungsgemäßen Verfahren wird dann aus einem regulär vorliegenden Stützstellengitter durch Verschiebung der einzelnen Pixel ein irreguläres Gitter erzeugt, wobei bevorzugt der Betrag der Verschiebung innerhalb eines vorgegebenen Bereiches liegt. Dabei können auch bestimmte Richtungen oder Flächen für jedes einzelne Pixel vorgegeben werden, in welchen das Pixel verschoben werden kann.

Das Minimieren der Operatoren bzw. die Minimierung oder Verringerung der Krümmung kann mit einer Vielzahl von Verfahren durchgeführt werden. Zum Beispiel kann unter Verwendung von Zufallszahlen ein Monte-Carlo-Verfahren oder Simulated Annealing durchgerührt werden, um ein lokales oder globales Minimum zu finden, wobei dieses Verfahren für alle oben beschriebenen Operatoren verwendbar ist. Andere gradientenbasierte Verfahren, welche lokale Minima finden, sind eingeschränkt verwendbar. Insbesondere im Falle des IsoMin Operators kann zur Minimierung ein Gauß-Seidl Verfahren verwendet werden. Zur Optimierung der Laufzeit empfiehlt es sich die Datenstruktur so zu wählen, dass eine vorgegebene Genauigkeit nicht unterschritten wird, wobei zum Beispiel nur eine bestimmte Anzahl von Nachkommastellen berücksichtigt wird oder eine einfache (integer) anstatt einer Fliesskomma (float) Genauigkeit bei der Realisierung auf einem Computer verwendet wird. Das Beschränken der Verschiebungsmöglichkeit eines Datenpunktes zum Beispiel um maximal ein halbes Pixel in möglicherweise nur einer vorgegebenen Richtung oder Fläche verringert weiterhin den Rechenaufwand.

Im Folgenden soll das Verfahren für dreidimensionale Datensätze, in Verallgemeinerung des zweidimensionalen Falles, erklärt werden. Gemäß diesem Aspekt der Erfindung wird aus einer Serie von zweidimensionalen Schnittbildern eines dreidimensionalen Objektes ein erstes dreidimensionales Datenmodell des Körpers erzeugt, wobei aus den in diesem dreidimensionalen Modell in benachbarten Ebenen liegenden Stützpunkten dreidimensionale Kuben oder andere geeignete dreidimensionale Objekte gebildet werden. Diese Kuben können ihrerseits nochmals in z. B. sechs irreguläre Tetraeder unterteilt werden. Dem Inneren jedes Tetraeders wird in Abhängigkeit von den Farb- bzw. Grauwerten an seinen vier Eckpunkten ein bestimmter Farb- bzw. Grauwert z. B. durch lineare Interpolation zugeordnet. Die Eckpunkte werden durch deren (x, y, z) Koordinate (auch Stützstellen genannt) und dem zugeordneten Farb- bzw. Grauwert (auch t-Koordinate genannt) beschrieben. Die lineare Interpolation entspricht in dieser Interpretation einem auf 3+1 Dimensionen verallgemeinerten Gouraud-Shading. Es wird eine Verschiebung der Eckpunkte in (x, y, z) Richtung durchgeführt, um eine Glättung von Objektkanten zu erreichen. Es werden also Stützstellen verschoben, wobei z. B. die Farb- bzw. Grauwerte nicht modifiziert werden müssen oder Zwischen-Stützstellen mit zu ermittelnden Farb- bzw. Grauwerten nicht eingeführt werden müssen. Die für den zweidimensionalen Fall definierten Operatoren werden geeignet auf drei Dimensionen verallgemeinert. Sie definieren ein Maß für eine Krümmung des Kontinuum-Modells und die Weise, wie die Stützstellen zu verschieben sind.

Die Stützstellen werden in dem dreidimensionalen Raum bzw. in (x, y, z) Richtung durch das erfindungsgemäße Verfahren so verschoben, dass die Gesamtkrümmung einer durch die Farbbzw. Grauwerte definierte Fläche, welche durch die oben genannten t-Koordinaten definiert wird, minimiert oder verringert wird. Nach erfolgter Minimierung weist das so erhaltene Bild nicht mehr die stufenförmigen Linien des Ursprungsbildes auf. Ebenso kann ein Bereich einer zulässigen Verschiebung einer Stützstelle vorgegeben werden, wie zum Beispiel eine vorgegebene maximale Entfernung, um welche jede Stützstelle verschoben werden kann. Dabei können natürlich unterschiedliche Höchstgrenzen in verschiedenen Richtungen vorgegeben werden, wobei es auch denkbar ist die Verschiebungsmöglichkeit auf eine gewisse Vorzugsrichtung, wie zum Beispiel die z-Achse oder einen Vorzugsbereich einzuschränken.

Der durch das erfindungsgemäße Verfahren erzeugte dreidimensionale Raum, welcher aus einer Vielzahl von z. B. irregulären Tetraedern gebildet wird, ermöglicht es auf relativ einfache Weise Bilder beliebig liegender Schnittebenen des Körpers zu erzeugen, da ein kontinuierlich im Raum definiertes Modell erzeugt wurde. Es ist auch möglich den so erhaltenen Datensatz wieder in einen regulären zum Beispiel orthogonalen Satz von Volumenelementen bzw. Voxeln umzuwandeln.

Ebenso ist es auch möglich zweidimensionale triangulierte Oberflächen von Objekten eines bestimmten Farb- oder Grauwertbereichs aus dem Datensatz zu extrahieren. Die dabei entstehende Oberfläche weist keine Diskretisierungsstufen mehr auf.

Die oben für das zweidimensionale Verfahren beschriebenen bevorzugten Ausführungsformen können analog auch beim dreidimensionalen Verfahren eingesetzt werden.

Die erfindungsgemäßen Verfahren ermöglichen vorteilhaft die Interpolation bzw. geglättete Darstellung einer nur diskret vorliegenden Funktion, so dass Bilder bzw. Datensätze höherer Qualität erzeugt werden können.

Da gemäß einer Ausführungsform der Erfindung die an diskreten Stellen vorliegenden Stützpunkte um z. B. maximal einen halben Pixel verschoben werden und die Farb- bzw. Grauwerte an den Stützstellen unverändert bleiben, tritt kein Informationsverlust auf, wobei eine Abbildung mit hoher Schärfe erhalten werden kann, die zugleich der Realität nicht entsprechende Stufen in der Abbildung vermeidet. Die Eliminierung von Diskretisierungsstufen ohne Verlust an Bildschärfe ist mit bisher bekannten Verfahren nicht möglich.

Es ist auch möglich das erfindungsgemäße Verfahren auf zwei- oder dreidimensionale Datensätze ohne Antialiasing anzuwenden, um ein nachträgliches Antialiasing von Bilddaten zu erreichen, und so die Qualität der Bilder oder Daten zu steigern.

Mit dem erfindungsgemäßen Verfahren ist es weiterhin möglich ein dreidimensionales Datenmodell eines dreidimensionalen Körpers mit zum Beispiel orthogonalen Voxeln aus einem vorgegebenen Datensatz an bestimmten Stützstellen zu ermitteln, um zum Beispiel eine weitere Analyse von dreidimensionalen Objekten anhand dieses Datensatzes durchzuführen.

Ein solcher dreidimensionaler Datensatz wird zum Beispiel bei einer Strahlentherapie benötigt, um eine optimale Bestrahlungssteuerung durchzuführen, so dass eine möglichst hohe Strahlendosis in einem bestimmten Gewebebereich erzeugt werden kann, wodurch beispielsweise ein Tumor zerstört werden soll. Hierbei soll jedoch umliegendes gesundes Gewebe möglichst gering belastet werden. Eine weitere Anwendung besteht z. B. in einer sehr genauen Rekonstruktion von Objekt-Oberflächen, z. B. der Wirbelsäule, um eine hohe Präzision bei Referenzierung und Navigation mit einem Navigationssystem zu erreichen.

Die erfindungsgemäße Vorrichtung weist eine Eingabe für einen Ausgangsdatensatz einer Serie von zweidimensionalen Aufnahmen auf, wobei aus diesem Ausgangsdatensatz ein beliebiges Schnittbild des dreidimensionalen Körpers erzeugt werden kann. Das so erzeugte Bild wird an einer Ausgabevorrichtung, wie zum Beispiel einer Anzeige, ausgegeben oder als Datensatz auf einem geeigneten Medium abgespeichert. Alternativ hierzu ist es auch möglich einen dreidimensionalen Datensatz zu erzeugen, welcher als Grundlage zur Erzeugung von Bildern in beliebigen Schnittebenen oder einer weiteren Verarbeitung der Daten dienen kann.

Wie oben ausgeführt wird dabei jeweils die durch speziell Operatoren definierte Krümmung einer durch Farb- bzw. Grauwerte definierten Fläche minimiert.

Vorteilhaft werden die Eingangsdaten mittels geeigneter Sensoren bei der Durchführung eines bilderzeugenden Verfahrens aufgenommen, wie zum Beispiel einer Computertomographie oder Kernspinresonanz. Jedoch ist es auch möglich die Eingangsdaten über ein geeignetes Speichermedium, wie zum Beispiel eine Diskette oder CD, oder auch über ein Datennetz einzugeben.

Die Erfindung bezieht sich weiterhin auf ein Computerprogrammprodukt, welches direkt in den internen Speicher eines digitalen Computers geladen werden kann und Softwarecodeabschnitte umfasst, mit denen die Schritte des oben geschilderten erfindungsgemäßen Verfahrens ausgeführt werden können, wenn das Produkt auf einem Computer läuft.

Ebenso bezieht sich die Erfindung auf ein Computerprogrammprodukt, das auf einem computergeeignetem Medium gespeichert ist und folgende Schritte umfasst:
- Einlesen eines diskreten Ausgangsdatensatzes, welcher ein dreidimensionales Objekt an diskreten Stützstellen beschreibt;
- Minimierung bzw. Verringerung der Krümmung einer durch eine Farb- bzw. Grauwertverteilung definierten Fläche des Ausgangsdatensatzes; und
- Erzeugung von zweidimensionalen Schnittbildern des dreidimensionalen Körpers oder Erzeugung eines dreidimensionalen Datensatzes zur kontinuierlichen Beschreibung des Körpers im dreidimensionalen Raum.

Weiterhin bezieht sich die Erfindung auf die Verwendung des oben beschriebenen Verfahrens zur Durchführung einer Strahlentherapie oder eines strahlenchirurgischen Eingriffs oder zum Zwecke der Navigation.

Die Erfindung wird nachfolgend anhand bevorzugter Ausführungsformen beschrieben. Dabei zeigen:
- Figur 1A bis E: Ein Ausgangsbild mit diskreten Stützstellen, welches gemäß dem Stand der Technik interpoliert und gemäß dem erfindungsgemäßen Verfahren ausgewertet wird;
- Figur 2: ein Kernspinresonanzbild, welches gemäß dem Stand der Technik und gemäß dem erfindungsgemäßen Verfahren ausgewertet wird;
- Figur 3: ein Bild gemäß einer alternativen Ausführungsform des erfindungsgemäßen Verfahrens;
- Figur 4: der Vergleich der Ergebnisse zweier Ausführungsformen des erfindungsgemäßen Verfahrens;
- Figur 5: eine weitere alternative Ausführungsform des erfindungsgemäßen Verfahrens;
- Figuren 6 und 7: einen Vergleich von Bildern nach dem Stand der Technik mit einer Ausführungsformen des erfindungsgemäßen Verfahrens;
- Figur 8: ein weiteres Bild gemäß einer Ausführungsform des erfindungsgemäßen Verfahrens; und
- Figur 9: ein weiterer Vergleich von gemäß der Erfindung ausgewerteten Bildern mit dem Stand der Technik.

Figur 1A zeigt einen von links oben nach rechts unten verlaufenden Körper, welcher aus zur Verfügung stehenden Datenwerten auf zueinander parallel liegenden Linien gebildet wird. Dabei ergeben sich aufgrund der im Abstand D voneinander entfernten Stützstellen des Bildes Abstufungen am Umfang des Körpers.

Figur 1B zeigt den Körper von Figur 1A, welcher nach einem bekannten Verfahren linear interpoliert wurde.

Figur 1C zeigt die Triangulierung des in Figur 1A gezeigten Bildes, wobei aus dem Ursprungsdatensatz ein reguläres Gitter aus Stützstellen erzeugt wird, welche die Eckpunkte von Dreiecken bilden. Wird als zu minimierender Operator der Operator *IsoMin* verwandt, so wird nach dem erfindungsgemäßen Verfahren aus dem in Figur 1C gezeigten regulären Gitter das in Figur 1D gezeigte irreguläre Gitter erzeugt, bei welchem die einzelnen Stützstellen um höchstens den Maximalbetrag eines halben Stützstellenabstandes bzw. Pixels verschoben sind, so dass aus dem stufenförmigen Umriss eine geglättete Linie erzeugt wird. Unter Verwendung des Gouraud-Shading der durch die einzelncn Stützstellen definierten verschobenen Dreiecke wird das in Figur 1E gezeigte Bild erzeugt, welches im Vergleich zum Bild 1B (Stand der Technik) einen geglätteten im wesentlichen stufenlosen Umriss aufweist. Die anderen Operatoren ergeben sehr ähnliche Resultate.

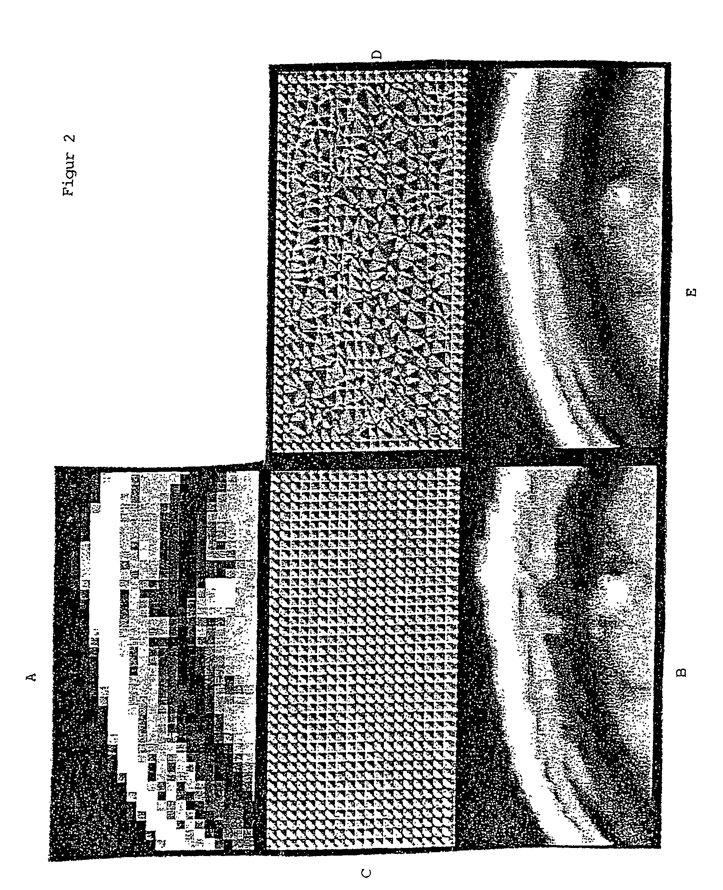

Figur 2A zeigt ein durch Kernspinresonanz aufgenommenes Bild eines dreidimensionalen Objekts, welches wie bei den Figuren 1A bis 1E beschrieben bearbeitet wurde. Dabei zeigt sich, dass das gemäß der Erfindung bearbeitete Bild 2E qualitativ deutlich besser ist als das gemäß dem Stand der Technik erzeugte Bild 2B, da es keine stufenförmigen Linien aufweist. Ein Benutzer erhält somit durch das Bild 2E eine realistischere Abbildung des dreidimensionalen Körpers.

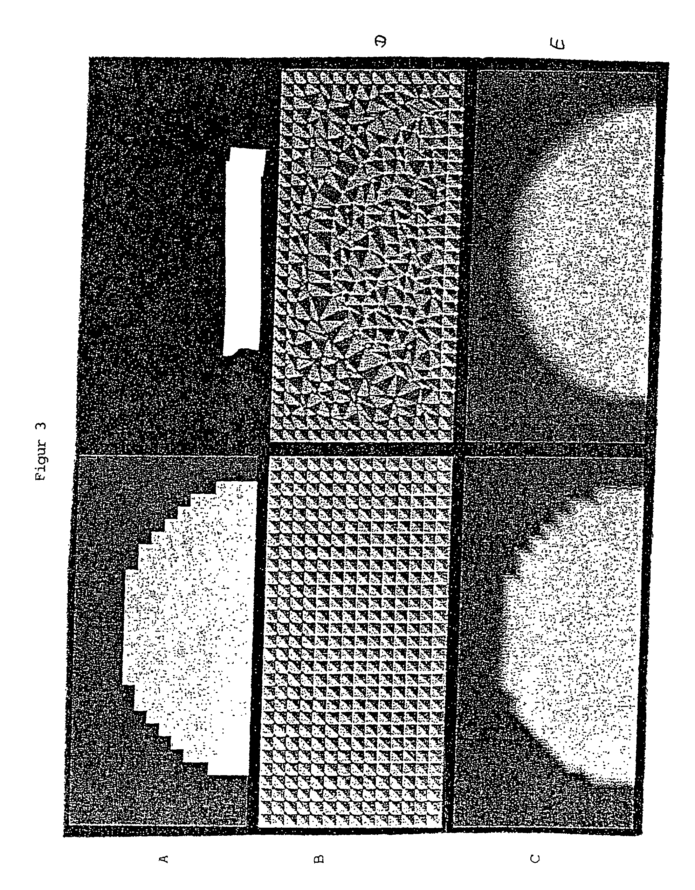

Figur 3 zeigt eine Ausführungsform des erfindungsgemäßen Verfahrens, bei welchem als Operator zur Bestimmung der Krümmung der *GaussMin* Operator verwendet wurde. Nach dem Stand der Technik wurde aus dem Ausgangsbild A das noch Abstufungen aufweisende Bild 3C erzeugt. Unter Verwendung des *GaussMin* Operators konnte das im wesentlichen stufenfreie Bild 3E erzeugt werden.

Figur 4 zeigt den Vergleich zweier erfindungsgemäßer Verfahren anhand eines Kreises. Dabei wurde gemäß Figur 4A der *IsoMin* Operator zur Messung der Krümmung verwendet. Figur 4C zeigt das Ergebnis eines triangulierten Bildes bei Verwendung des *IsoSmooth* Operators. Die aus den triangulierten und erfindungsgemäß ausgewerteten Bildern 4A und 4C erzeugten Bilder 4B und 4D zeigen, dass bei Verwendung eines Halbkreises als Testobjekt der *IsoSmooth* Operator ein besseres Ergebnis liefert.

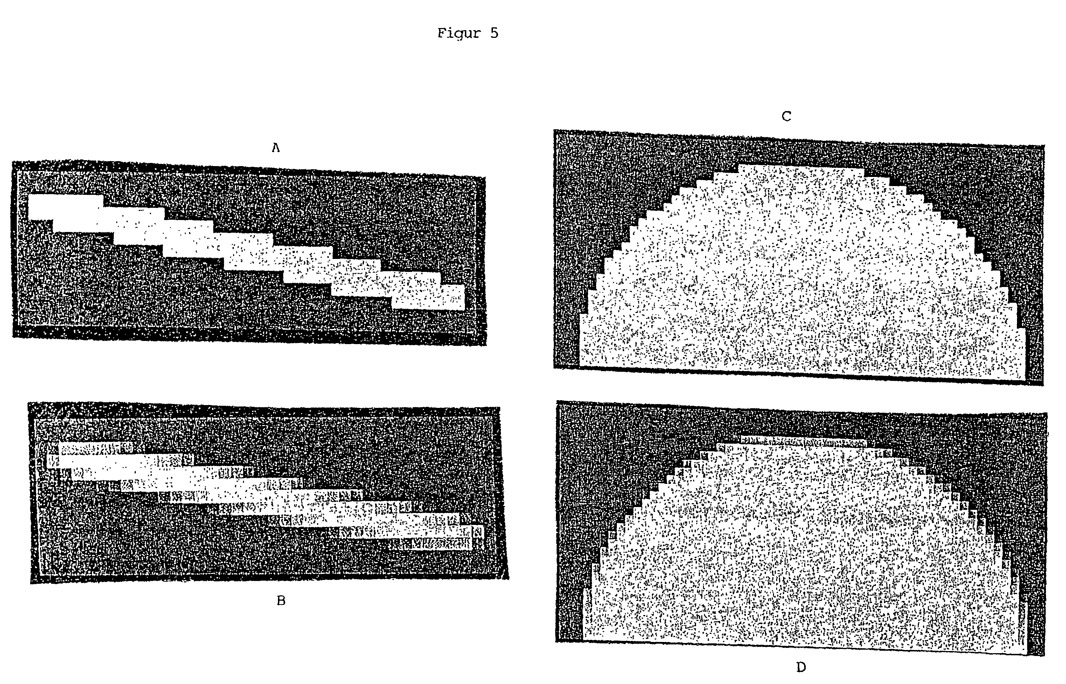

Figur 5 zeigt eine alternative Ausführungsform der Erfindung. Dabei wurde als Operator zur Bestimmung der Krümmung der *IsoMin* Operator verwendet. Aus den Ausgangsbildem 5A und 5C wurden die Bilder 5B und 5D gleicher Auflösung erzeugt. Das erfindungsgemäße Verfahren bewirkt, wie deutlich zu erkennen, ein nachträgliches Antialiasing.

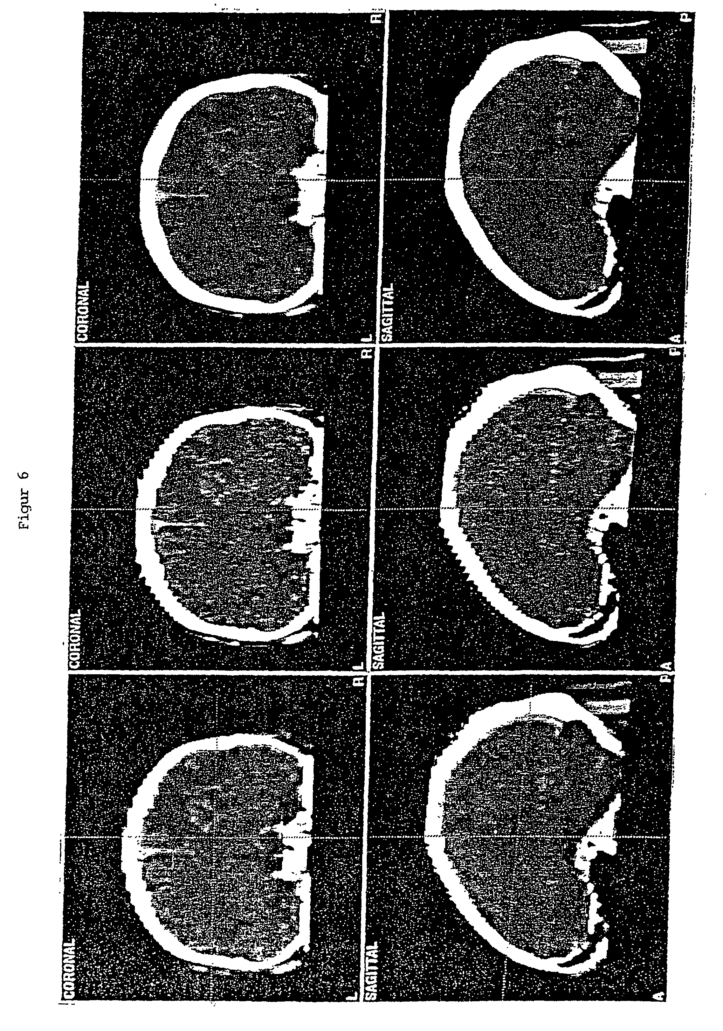

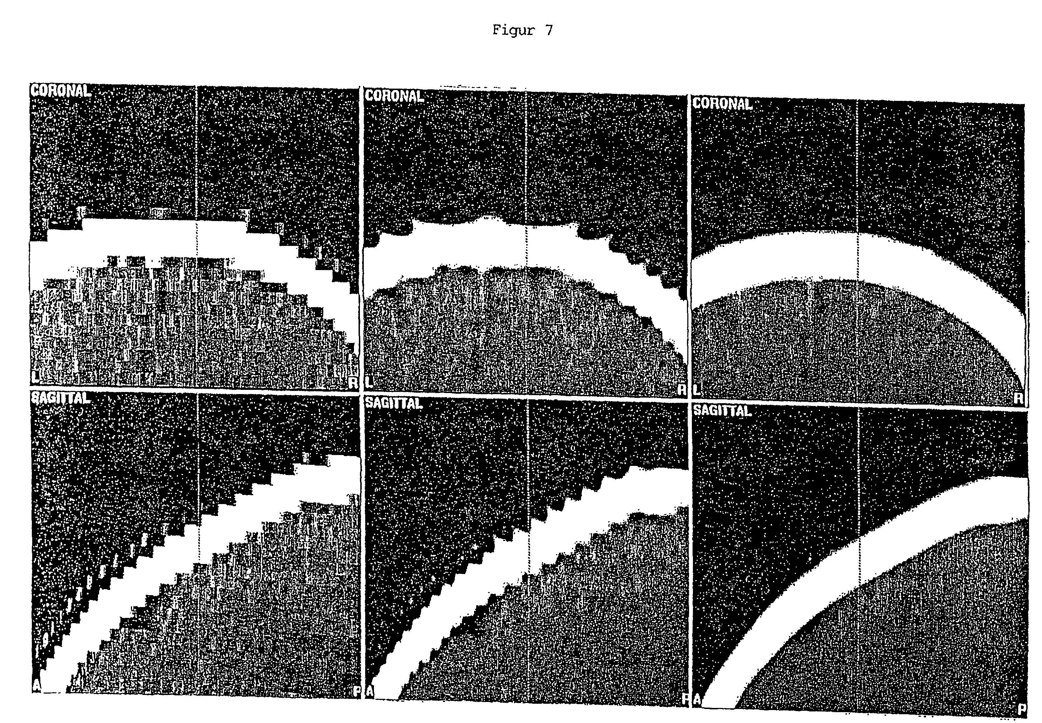

Die Figuren 6 und 7 zeigen von links nach rechts jeweils koronale und sagittale Schnittbilder eines menschlichen Kopfes, wobei die linken Bilder eine direkte Darstellung des dreidimensionalen Datensatzes sind, die mittleren Bilder aus einem dreidimensionalen Datensatz durch tri-kubische Interpolation erzeugt wurden und die rechten Bilder aus einem dreidimensionalen Datensatz mit dem erfindungsgemäßen *IsoMin* Operator erzeugt wurden. Die auf den rechten Seiten dargestellten Abbildungen zeigen, dass trotz eines nur an diskreten Stützstellen vorliegenden Ausgangsdatensatzes im wesentlichen stufenlos verlaufende Linien erzeugt werden konnten.

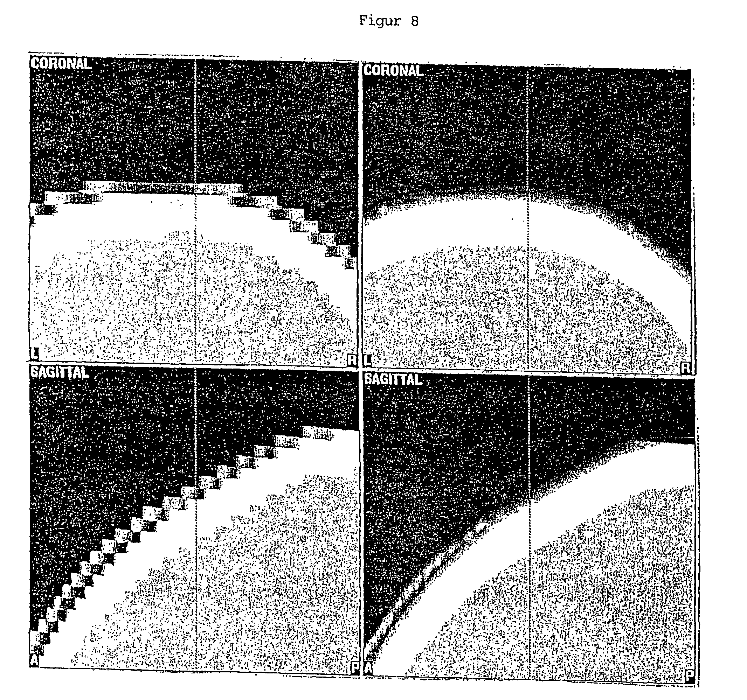

Figur 8 zeigt auf der rechten Seite die erfindungsgemäß erzeugtcn Bilder, im Vcrgleich zu einer direkten Darstellung des dreidimensionalen Datensatzes auf der linken Seite.

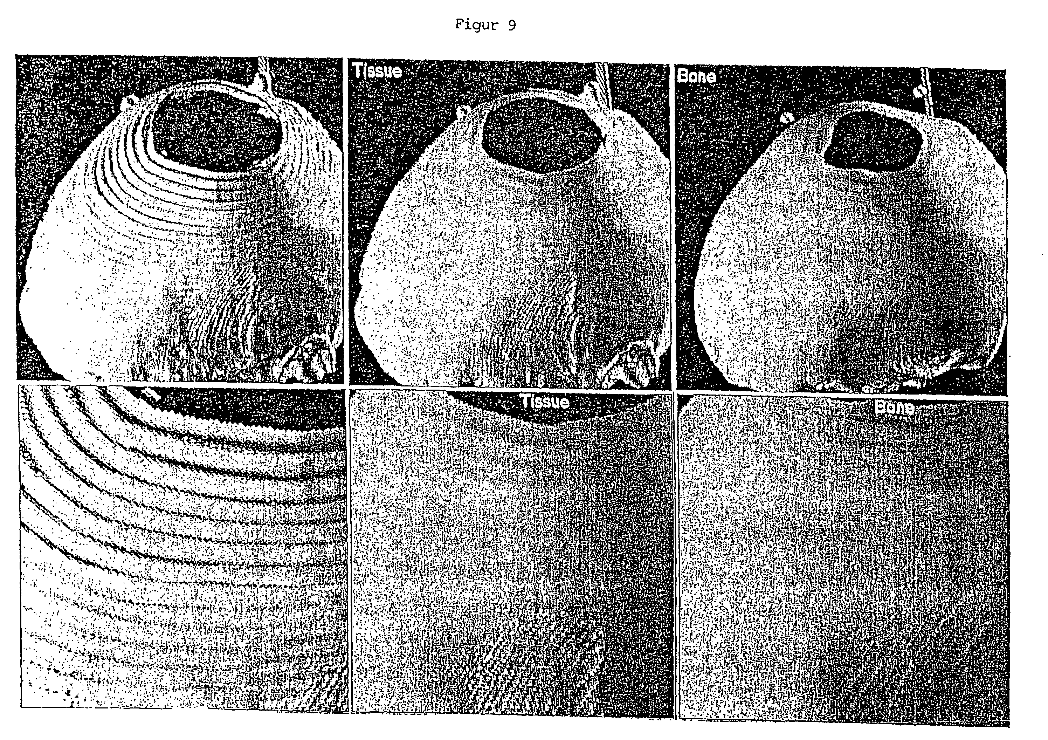

Figur 9 zeigt auf der linken Seite die Darstellung eines Körpers nach dem Stand der Technik. Die mittleren Bilder zeigen die Gewebestruktur und die rechten Bilder die Knochenstruktur des gleichen dreidimensionalen Objektes, welche jedoch gemäß der Erfindung ausgewertet wurden.

Die Erfindung bezieht sich allgemein auf ein Verfahren zur Glättung von durch Diskretisierung hervorgerufenen Stufen in zweidimensionalen Aufnahmen oder in einer Serie von zweidimensionalen Aufnahmen, die einen dreidimensionalen Datensatz bilden. Zuerst wird ein erstes zwei- bzw. dreidimensionales kontinuierliches Datenmodell der Aufnahmen erzeugt, in dem aneinander grenzende Pixel Quadrate bzw. Kuben bilden, welche ihrerseits nochmals in Dreiecke bzw. Tetraeder unterteilt werden. Den Eckpunkten werden die Farb- bzw. Grauwerte der Pixel der Aufnahme zugeordnet. Farb- bzw. Grauwerte an beliebigen Zwischenwerten im Inneren der Dreiecke bzw. Tetraeder können nun z. B. durch lineare Interpolation gewonnen werden. Die Glättung der Bildkanten erfolgt durch Verschiebung der Stützstellen um bevorzugt nicht mehr als einen halben Pixel. Weiterer Bestandteil der Erfindung sind spezielle zu diesem Zweck entwickelte Operatoren, die ein verallgemeinertes Maß für die Krümmung des Kontinuum-Modells darstellen und die Weise, wie die Stützstellen zu verschieben sind, eindeutig festlegen. Die Stützstellen werden so verschoben, dass die Gesamtkrümmung verringert bzw. minimiert wird. Nach erfolgter Minimierung weist das so erhaltene Bild nicht mehr die stufenförmigen Linien des Ursprungsbildes auf. Das so erzeugte kontinuierliche Modell, welches aus einer Vielzahl von nun irregulärem Dreiecken bzw. Tetraedern gebildet wird, ermöglicht es auf relativ einfache Weise den so erhaltenen Datensatz wieder in ein reguläres, zum Beispiel orthogonales Pixelbild umzuwandeln. Ebenso ist es auch möglich zweidimensionale triangulierte Oberflächen von Objekten eines bestimmten Farb- oder Grauwertbereichs aus dem dreidimensionalen Datensatz zu extrahieren oder Schnittbilder in beliebigen Ebenen zu erzeugen, welche nicht in einer Aufnahmeebene liegen.

## Patentansprüche

1. Verfahren zur Erzeugung eines zweidimensionalen Bildes aus einem zweidimensionalen Ausgangs-Datensatz, der eine Farb- bzw. Grauwertverteilung definiert, wobei:
a) die Stützstellen des Ausgangs-Datensatzes Eckpunkte von Rechtecken sind, welche in Dreiecke unterteilt werden;
b) dem Innenbereich der Dreiecke Farb- bzw. Grauwerte durch Interpolation der Farb- bzw. Grauwerte an den Eckpunkten der Dreiecke zugeordnet werden, um ein kontinuierliches Daten-Modell zu erzeugen;
c) durch Verschieben der Eckpunkte die Krümmungen der durch die Graubzw. Farbewertverteilung definierten Fläche verringert oder minimiert wird, wobei das kontinuierliche Daten-Modell entsprechend verschoben wird; und
d) aus dem verschobenen kontinuierlichen Daten-Modell ein zweidimensionales Bild erzeugt wird; wobei
e) zur Bestimmung der Krümmung die Fläche der Projektion eines Dreiecks in Gradientenrichtung verwendet wird.

2. Verfahren zur Erzeugung eines zweidimensionalen Bildes aus einem zweidimensionalen Ausgangs-Datensatz, der eine Farb- bzw. Grauwertverteilung definiert, wobei:
a) die Stützstellen des Ausgangs-Datensatzes Eckpunkte von Rechtecken sind, welche in Dreiecke unterteilt werden;
b) dem Innenbereich der Dreiecke Farb- bzw. Grauwerte durch Interpolation der Farb- bzw. Grauwerte an den Eckpunkten der Dreiecke zugeordnet werden, um ein kontinuierliches Daten-Modell zu erzeugen;
c) durch Verschieben der Eckpunkte die Krümmungen der durch die Graubzw. Farbewertverteilung definierten Fläche verringert oder minimiert wird, wobei das kontinuierliche Daten-Modell entsprechend verschoben wird; und
d) aus dem - verschobenen kontinuierlichen Daten-Modell ein zweidimensionales Bild erzeugt wird; wobei
e) zur Bestimmung der Krümmung das mathematische Krümmungsquadrat orthogonal zur Gradientenrichtung verwendet wird.

3. Verfahren zur Erzeugung eines zweidimensionalen Bildes aus einem zweidimensionalen Ausgangs-Datensatz, der eine Farb- bzw. Grauwertverteilung definiert, wobei:
a) die Stützstellen des Ausgangs-Datensatzes Eckpunkte von Rechtecken sind, welche in Dreiecke unterteilt werden;
b) dem Innenbereich der Dreiecke Farb- bzw. Grauwerte durch Interpolation der Farb- bzw. Grauwerte an den Eckpunkten der Dreiecke zugeordnet werden, um ein kontinuierliches Daten-Modell zu erzeugen;
c) durch Verschieben der Eckpunkte die Krümmungen der durch die Graubzw. Farbewertverteilung definierten Fläche verringert oder minimiert wird, wobei das kontinuierliche Daten-Modell entsprechend verschoben wird; und
d) aus dem verschobenen kontinuierlichen Daten-Modell ein zweidimensionales Bild erzeugt wird; wobei
e) zur Bestimmung der Krümmung das Produkt der Hauptkrümmungen verwendet wird.

4. Verfahren nach einem der vorhergehenden Ansprüche, wobei zur Minimierung der Krümmung einzelne Bildelemente des Ausgangs-Datensatzes nur innerhalb eines vorgegebenen Bereiches verschoben werden können.

5. Verfahren nach einem der vorhergehenden Ansprüche, wobei ein Gauss-Seidl-Verfahren zur Verringerung bzw. Minimierung der Krümmung eingesetzt wird.

6. Verfahren zur Erzeugung eines dreidimensionalen Datensatzes, welcher durch eine Serie von zweidimensionalen Datensätzen beschrieben wird, wobei:
a) ein erstes dreidimensionales Modell des dreidimensionalen Raumes aus den zweidimensionalen Datensätzen erzeugt wird;
b) das dreidimensionale Modell in dreidimensionale Objekte, insbesondere Quader oder Tetraeder unterteilt wird, die ihrerseits in Tetraeder oder andere dreidimensionale Objekte unterteilt werden können;
c) dem Innenbereich der dreidimensionalen Objekte bzw. Tetraeder Farb- bzw. Grauwerte durch Interpolation der Farb- bzw. Grauwerte an den jeweiligen Eckpunkten zugeordnet werden, um ein kontinuierliches Daten-Modell zu erzeugen; und
d) durch Verschieben der Eckpunkte die Krümmungen der durch die Farbbzw. Grauwertverteilung definierten Hyperfläche verringert oder minimiert wird, wobei das kontinuierliche Daten-Modell entsprechend verschoben wird; wobei
e) zur Bestimmung der Krümmung die Hyperfläche der Projektion eines Tetraeders in Gradientenrichtung verwendet wird

7. Verfahren zur Erzeugung eines dreidimensionalen Datensatzes, welcher durch eine Serie von zweidimensionalen Datensätzen beschrieben wird, wobei:
a) ein erstes dreidimensionales Modell des dreidimensionalen Raumes aus den zweidimensionalen Datensätzen erzeugt wird;
b)das dreidimensionale Modell in dreidimensionale Objekte, insbesondere Quader oder Tetraeder unterteilt wird, die ihrerseits in Tetraeder oder andere dreidimensionale Objekte unterteilt werden können;
c) dem Innenbereich der dreidimensionalen Objekte bzw. Tetraeder Farb- bzw. Grauwerte durch Interpolation der Farb- bzw. Grauwerte an den jeweiligen Eckpunkten zugeordnet werden, um ein kontinuierliches Daten-Modell zu erzeugen; und
d) durch Verschieben der Eckpunkte die Krümmungen der durch die Farb- bzw. Grauwertverteilung definierten Hyperfläche verringert oder minimiert wird, wobei das kontinuierliche Daten-Modell entsprechend verschoben wird; wobei
e) zur Bestimmung der Krümmung das mathematische Krümmungsquadrat orthogonal zur Gradientenrichtung verwendet wird.

8. Verfahren zur Erzeugung eines dreidimensionalen Datensatzes, welcher durch eine Serie von zweidimensionalen Datensätzen beschrieben wird, wobei:
a) ein erstes dreidimensionales Modell des dreidimensionalen Raumes aus den zweidimensionalen Datensätzen erzeugt wird;
b) das dreidimensionale Modell in dreidimensionale Objekte, insbesondere Quader oder Tetraeder unterteilt wird, die ihrerseits in Tetraeder oder andere dreidimensionale Objekte unterteilt werden können;
c) dem Innenbereich der dreidimensionalen Objekte bzw. Tetraeder Farb- bzw. Grauwerte durch Interpolation der Farb- bzw. Grauwerte an den jeweiligen Eckpunkten zugeordnet werden, um ein kontinuierliches Daten-Modell zu erzeugen; und
d) durch Verschieben der Eckpunkte die Krümmungen der durch die Farb- bzw. Grauwertverteilung definierten Hyperfläche verringert oder minimiert wird, wobei das kontinuierliche Daten-Modell entsprechend verschoben wird; wobei
e) wobei zur Bestimmung der Krümmung das Produkt der Hauptkrümmungen verwendet wird.

9. Verfahren nach einem der Ansprüche 6 bis 8, wobei aus dem verschobenen kontinuierlichen Modell ein neuer dreidimensionaler Volumen-Datensatz erzeugt wird.

10. Verfahren nach einem der Ansprüche 6 bis 9, wobei zur Verringerung bzw. Minimierung der Krümmung einzelne Stützstellen nur innerhalb eines vorgegebenen Bereiches verschoben werden können.

11. Verfahren nach einem der Ansprüche 6 bis 10, wobei ein Gauss-Seidl-Verfahren zur Verringerung bzw. Minimierung der Krümmung eingesetzt wird.

12. Verfahren nach einem der Ansprüche 6 bis 11, wobei aus dem kontinuierlichen Daten-Modell nach der Verschiebung zweidimensionale Schnittbilder erzeugt werden.

13. Verfahren nach einem der Ansprüche 6 bis 12, wobei aus dem kontinuierlichen Modell durch Wahl eines Farb- bzw. Grauwert-Grenzwertes zweidimensionale triangulierte Oberflächen erzeugt werden.

14. Vorrichtung zur Erzeugung eines zweidimensionalen Bildes aus einem zweidimensionalen Ausgangs-Datensatz, der eine Farb- bzw. Grauwertverteilung definiert, mit:
a) einer Eingabevorrichtung für den zweidimensionalen Ausgangs-Datensatz;
b) einer Vorrichtung zur Unterteilung der durch die Stützstellen des Ausgangs-Datensatzes gebildeten Rechtecke in Dreiecke, zum Zuordnen von Farbbzw. Grauwerten zu dem Innenbereich der Dreiecke durch Interpolation der Farb- bzw. Grauwerte an den Eckpunkten der Dreiecke, um ein kontinuierliches Daten-Modell zu erzeugen, zum Verschieben der Eckpunkte, um die Krümmungen der durch die Grau- bzw. Farbwertverteilung definierten Fläche zu verringern oder zu minimieren, wobei das kontinuierliche Daten-Modell entsprechend verschoben wird und zum Erzeugen eines zweidimensionalen Bildes aus dem verschobenen kontinuierlichen Daten-Modell, wobei zur Bestimmung der Krümmung die Fläche der Projektion eines Dreiecks in Gradientenrichtung oder das mathematische Krümmungsquadrat orthogonal zur Gradientenrichtung oder das Produkt der Hauptkrümmungen verwendet wird; und
c) einer Ausgabevorrichtung zur Ausgabe des erzeugten zweidimensionalen Bildes.

15. Vorrichtung zur Erzeugung eines dreidimensionalen Datensatzes, welcher durch eine Serie von zweidimensionalen Datensätzen beschrieben wird, mit:
a) einer Eingabevorrichtung für die Serie von zweidimensionalen Datensätzen;
b) einer Vorrichtung zur Erzeugung eines ersten dreidimensionalen Modells des dreidimensionalen Raumes aus den zweidimensionalen Datensätzen, zum Unterteilen des dreidimensionalen Modells in dreidimensionale Objekte, insbesondere Quader oder Tetraeder, die ihrerseits in Tetraeder oder andere dreidimensionale Objekte unterteilt werden können, zum Erzeugen eines kontinuierlichen Daten-Modells durch Zuordnen von Farb- bzw. Grauwerten zu dem Innenbereich der dreidimensionalen Objekte bzw. Tetraeder durch Interpolation der Farb- bzw. Grauwerte an den jeweiligen Eckpunkten, zum Verringern oder Minimieren der Krümmungen der durch die Farb- bzw. Grauwertverteilung definierten Hyperfläche durch Verschieben der Eckpunkte, wobei das kontinuierliche Daten-Modell entsprechend verschoben wird und wobei zur Bestimmung der Krümmung die Hyperfläche der Projektion eines Tetraeders in Gradientenrichtung oder das mathematische Krümmungsquadrat orthogonal zur Gradientenrichtung oder das Produkt der Hauptkrümmungen verwendet wird; und
c) einer Ausgabevorrichtung zur Ausgabe des dreidimensionalen Datensatzes.

16. Vorrichtung nach einem der Ansprüche 14 oder 15, wobei die Ausgabevorrichtung eine Anzeigevorrichtung ist.

17. Vorrichtung nach einem der Anspruch 14 bis 16, wobei die Eingabevorrichtung eine Vorrichtung zur Durchführung einer Computertomographie, eines Ultraschall- oder Kernspinresonanzverfahrens ist.

18. Computerprogramm, das direkt in den internen Speicher eines digitalen Computers geladen werden kann und Softwarecodeabschnitte umfasst, mit denen die Schritte gemäß einem der Ansprüche 1 bis 13 ausgeführt werden können, wenn das Produkt auf einem Computer läuft.

19. Verwendung des Verfahrens nach einem der Ansprüche 1 bis 13 zur Steuerung oder Durchführung einer Strahlentherapie oder eines strahlenchirurgischen Verfahrens.

20. Verwendung des Verfahrens nach einem der Ansprüche 1 bis 13 zur Lokalisierung eines Objekts oder Navigation mit einem Navigationssystem.

## Claims

1. A method for generating a two-dimensional image from a two-dimensional original set of data defining a chromatic or monochrome value distribution, wherein:
a) the supporting points of the original data set are corner points of rectangles, which are sub-divided into triangles;
b) chromatic or monochrome values are assigned to the interior portion of the triangles by interpolating the chromatic or monochrome values at the comer points of the triangles, to generate a continuum data model;
c) the comer points are shifted to reduce or minimise the curvatures of the area defined by the chromatic or monochrome value distribution, thereby shifting the continuum data model correspondingly; and
d) a two-dimensional image is generated from the shifted continuum data model; wherein
e) use is made of the area of the projection of a triangle in the direction of the gradient, for defining the curvature.

2. A method for generating a two-dimensional image from a two-dimensional original set of data defining a chromatic or monochrome value distribution, wherein:
a) the supporting points of the original data set are comer points of rectangles, which are sub-divided into triangles;
b) chromatic or monochrome values are assigned to the interior portion of the triangles by interpolating the chromatic or monochrome values at the comer points of the triangles, to generate a continuum data model;
c) the comer points are shifted to reduce or minimise the curvatures of the area defined by the chromatic or monochrome value distribution, thereby shifting the continuum data model correspondingly; and
d) a two-dimensional image is generated from the shifted continuum data model; wherein
e) use is made of the mathematical square of the curvature orthogonal to the direction of the gradient, for defining the curvature.

3. A method for generating a two-dimensional image from a two-dimensional original set of data defining a chromatic or monochrome value distribution, wherein:
a) the supporting points of the original data set are corner points of rectangles, which are sub-divided into triangles;
b) chromatic or monochrome values are assigned to the interior portion of the triangles by interpolating the chromatic or monochrome values at the comer points of the triangles, to generate a continuum data model;
c) the comer points are shifted to reduce or minimise the curvatures of the area defined by the chromatic or monochrome value distribution, thereby shifting the continuum data model correspondingly; and
d) a two-dimensional image is generated from the shifted continuum data model; wherein
e) use is made of the product of the main curvatures, for defining the curvature.

4. The method as set forth in any one of the preceding claims, wherein individual picture elements or pixels of the original data set, for minimising the curvature, can only be shifted within a predefined range.

5. The method as set forth in any one of the preceding claims, wherein use is made of a Qauß-Seidl method, for reducing or minimising the curvature.

6. A method for generating a three-dimensional data set described by a series of two-dimensional sets of data, wherein:
a) a first three-dimensional model of the three-dimensional space is generated from the two-dimensional sets of data;
b) the three-dimensional model is divided into three-dimensional objects, more particularly cuboids or tetrahedrons, which in turn can be divided into tetrahedrons or other three-dimensional objects;
c) chromatic or monochrome values are assigned to the interior portion of the three-dimensional objects or tetrahedrons by interpolating the chromatic or monochrome values at the corresponding comer points, to generate a continuum data model; and
d) the corner points are shifted, to reduce or minimise the curvatures of the hyper area defined by the chromatic or monochrome value distribution, thereby shifting the continuum data model correspondingly; wherein
e) use is made of the hyper area of the projection of a tetrahedron in the direction of the gradient, for defining the curvature.

7. A method for generating a three-dimensional data set described by a series of two-dimensional sets of data, wherein:
a) a first three-dimensional model of the three-dimensional space is generated from the two-dimensional sets of data;
b) the three-dimensional model is divided into three-dimensional objects, more particularly cuboids or tetrahedrons, which in turn can be divided into tetrahedrons or other three-dimensional objects;
c) chromatic or monochrome values are assigned to the interior portion of the three-dimensional objects or tetrahedrons by interpolating the chromatic or monochrome values at the corresponding comer points, to generate a continuum data model; and
d) the comer points are shifted, to reduce or minimise the curvatures of the hyper area defined by the chromatic or monochrome value distribution, thereby shifting the continuum data model correspondingly; wherein
e) use is made of the mathematical square of the curvature orthogonal to the direction of the gradient, for defining the curvature.

8. A method for generating a three-dimensional data set described by a series of two-dimensional sets of data, wherein:
a) a first three-dimensional model of the three-dimensional space is generated from the two-dimensional sets of data;
b) the three-dimensional model is divided into three-dimensional objects, more particularly cuboids or tetrahedrons, which in turn can be divided into tetrahedrons or other three-dimensional objects;
c) chromatic or monochrome values are assigned to the interior portion of the three-dimensional objects or tetrahedrons by interpolating the chromatic or monochrome values at the corresponding corner points, to generate a continuum data model; and
d) the corner points are shifted, to reduce or minimise the curvatures of the hyper area defined by the chromatic or monochrome value distribution, thereby shifting the continuum data model correspondingly; wherein
e) use is made of the product of the main curvatures, for defining the curvature.

9. The method as set forth in any one of claims 6 to 8, wherein a new three-dimensional volume data set is generated from the shifted continuum model.

10. The method as set forth in any one of claims 6 to 9, wherein individual supporting points, for reducing or minimising the curvature, can only be shifted within a predefined range.

11. The method as set forth in any one of claims 6 to 10, wherein use is made of a Gauß-Seidl method, for reducing or minimising the curvature.

12. The method as set forth in any one of claims 6 to 11, wherein two-dimensional slice images are generated from the continuum data model, after shifting.

13. The method as set forth in any one of claims 6 to 12, wherein two-dimensional triangulated surfaces are generated from the continuum model by selecting a chromatic or monochrome value limit.

14. A system for generating a two-dimensional image from a two-dimensional original set of data defining a chromatic or monochrome value distribution, comprising:
a) a device for inputting the two-dimensional original set of data;
b) a device for sub-dividing the rectangles formed by the supporting points of the original data set into triangles, for assigning chromatic or monochrome values to the interior portion of the triangles by interpolating the chromatic or monochrome values at the comer points of the triangles, to generate a continuum data model, for shifting the corner points to reduce or minimise the curvatures of the area defined by the chromatic or monochrome value distribution, thereby shifting the continuum data model correspondingly, and for generating a two-dimensional image from the shifted continuum data model, wherein use is made of the area of the projection of a triangle in the direction of the gradient, or of the mathematical square of the curvature orthogonal to the direction of the gradient, or of the product of the main curvatures, for defining the curvature; and
c) a device for outputting the generated two-dimensional image.

15. A system for generating a three-dimensional data set described by a series of two-dimensional sets of data, comprising:
a) a device for inputting the series of two-dimensional sets of data;
b) a device for generating a first three-dimensional model of the three-dimensional space from the two-dimensional sets of data, for dividing the three-dimensional model into three-dimensional objects, more particularly cuboids or tetrahedrons, which in turn can be divided into tetrahedrons or other three-dimensional objects, for assigning chromatic or monochrome values to the interior portion of the three-dimensional objects or tetrahedrons by interpolating the chromatic or monochrome values at the corresponding corner points, to generate a continuum data model, for shifting the corner points, to reduce or minimise the curvatures of the hyper area defined by the chromatic or monochrome value distribution, thereby shifting the continuum data model correspondingly, and wherein use is made of the hyper area of the projection of a tetrahedron in the direction of the gradient, or of the mathematical square of the curvature orthogonal to the direction of the gradient, or of the product of the main curvatures, for defining the curvature; and
c) a device for outputting the generated the three-dimensional data set.

16. The system as set forth in any one of claims 14 or 15, wherein the output device is a display.

17. The system as set forth in any one of claims 14 to 16, wherein the input device is a device for producing a computer tomograph, an ultrasound or a magnetic nuclear resonance image.

18. A computer program directly loadable into the internal memory of a digital computer and comprising software code sections with which the steps as set forth in any one of claims 1 to 13 can be implemented, when the product is run on a computer.

19. Use of the method as set forth in any one of claims 1 to 13, for controlling or implementing radiotherapy or for a radiosurgical method.

20. Use of the method as set forth in any one of claims 1 to 13, for localising an object or navigating with a navigation system.

## Revendications

1. Procédé de génération d'une image bidimensionnelle à partir d'un jeu de données bidimensionnel de départ définissant une répartition de couleurs ou de niveaux de gris, dans lequel:
a) les points de référence du jeu de données de départ sont des points d'angle de rectangles qui sont divisés en triangles;
b) des valeurs de couleur ou des niveaux de gris sont attribués à la zone intérieure des triangles par interpolation des valeurs de couleur ou des niveaux de gris aux points d'angle des triangles afin de générer un modèle de données continu;
c) les courbures des surfaces définies par la répartition des valeurs de couleur ou des niveaux de gris sont diminuées ou minimisées par déplacement des points d'angle, le modèle de données continu étant déplacé en conséquence; et
d) une image bidimensionnelle est générée à partir du modèle de données continu déplacé;
e) la surface de la projection d'un triangle en direction du gradient étant utilisée pour la détermination de la courbure.

2. Procédé de génération d'une image bidimensionnelle à partir d'un jeu de données bidimensionnel de départ définissant une répartition de couleurs ou de niveaux de gris, dans lequel:
a) les points de référence du jeu de données de départ sont des points d'angle de rectangles qui sont divisés en triangles;
b) des valeurs de couleur ou des niveaux de gris sont attribués à la zone intérieure des triangles par interpolation des valeurs de couleur ou des niveaux de gris aux points d'angle des triangles afin de générer un modèle de données continu;
c) les courbures des surfaces définies par la répartition des valeurs de couleur ou des niveaux de gris sont diminuées ou minimisées par déplacement des points d'angle, le modèle de données continu étant déplacé en conséquence; et
d) une image bidimensionnelle est générée à partir du modèle de données continu déplacé;
e) le carré mathématique de la courbure perpendiculairement à la direction du gradient est utilisé pour la détermination de la courbure.

3. Procédé de génération d'une image bidimensionnelle à partir d'un jeu de données bidimensionnel de départ définissant une répartition de couleurs ou de niveaux de gris, dans lequel:
a) les points de référence du jeu de données de départ sont des points d'angle de rectangles qui sont divisés en triangles;
b) des valeurs de couleur ou des niveaux de gris sont attribués à la zone intérieure des triangles par interpolation des valeurs de couleur ou des niveaux de gris aux points d'angle des triangles afin de générer un modèle de données continu;
c) les courbures des surfaces définies par la répartition des valeurs de couleur ou des niveaux de gris sont diminuées ou minimisées par déplacement des points d'angle, le modèle de données continu étant déplacé en conséquence; et
d) une image bidimensionnelle est générée à partir du modèle de données continu déplacé;
e) le produit des courbures principales est utilisé pour la détermination de la courbure.

4. Procédé suivant l'une des revendications précédentes, des éléments d'image individuels du jeu de données de départ pouvant être déplacés uniquement à l'intérieur d'une zone prédéfinie afin de minimiser la courbure.

5. Procédé suivant l'une des revendications précédentes, un procédé Gauss-Seidl étant utilisé pour diminuer ou minimiser la courbure.

6. Procédé de génération d'un jeu de données tridimensionnel, lequel est décrit par une série de jeux de données bidimensionnels, dans lequel:
a) un premier modèle tridimensionnel de l'espace tridimensionnel est généré à partir des jeux de données bidimensionnels;
b) le modèle tridimensionnel est divisé en objets tridimensionnels, en particulier en parallélépipèdes ou en tétraèdres, qui peuvent eux-mêmes être divisés en tétraèdres ou en d'autres objets tridimensionnels;
c) des valeurs de couleur ou des niveaux de gris sont attribués à la zone intérieure des objets tridimensionnels ou des tétraèdres par interpolation des valeurs de couleur ou des niveaux de gris aux points d'angle respectifs afin de générer un modèle de données continu; et
d) les courbures des hypersurfaces définies par la répartition des valeurs de couleur ou des niveaux de gris sont diminuées ou minimisées par déplacement des points d'angle, le modèle de données continu étant déplacé en conséquence;
e) l'hypersurface de la projection d'un tétraèdre en direction du gradient étant utilisée pour la détermination de la courbure.

7. Procédé de génération d'un jeu de données tridimensionnel, lequel est décrit par une série de jeux de données bidimensionnels, dans lequel:
a) un premier modèle tridimensionnel de l'espace tridimensionnel est généré à partir des jeux de données bidimensionnels;
b) le modèle tridimensionnel est divisé en objets tridimensionnels, en particulier en parallélépipèdes ou en tétraèdres, qui peuvent eux-mêmes être divisés en tétraèdres ou en d'autres objets tridimensionnels;
c) des valeurs de couleur ou des niveaux de gris sont attribués à la zone intérieure des objets tridimensionnels ou des tétraèdres par interpolation des valeurs de couleur ou des niveaux de gris aux points d'angle respectifs afin de générer un modèle de données continu; et
d) les courbures des hypersurfaces définies par la répartition des valeurs de couleur ou des niveaux de gris sont diminuées ou minimisées par déplacement des points d'angle, le modèle de données continu étant déplacé en conséquence;
e) le carré mathématique de la courbure perpendiculairement à la direction du gradient est utilisé pour la détermination de la courbure.

8. Procédé de génération d'un jeu de données tridimensionnel, lequel est décrit par une série de jeux de données bidimensionnels, dans lequel:
a) un premier modèle tridimensionnel de l'espace tridimensionnel est généré à partir des jeux de données bidimensionnels;
b) le modèle tridimensionnel est divisé en objets tridimensionnels, en particulier en parallélépipèdes ou en tétraèdres, qui peuvent eux-mêmes être divisés en tétraèdres ou en d'autres objets tridimensionnels;
c) des valeurs de couleur ou des niveaux de gris sont attribués à la zone intérieure des objets tridimensionnels ou des tétraèdres par interpolation des valeurs de couleur ou des niveaux de gris aux points d'angle respectifs afin de générer un modèle de données continu; et
d) les courbures des hypersurfaces définies par la répartition des valeurs de couleur ou des niveaux de gris sont diminuées ou minimisées par déplacement des points d'angle, le modèle de données continu étant déplacé en conséquence;
e) le produit des courbures principales étant utilisé pour la détermination de la courbure.

9. Procédé suivant l'une des revendications 6 à 8, un nouveau jeu de données volumique tridimensionnel étant généré à partir du modèle continu déplacé.

10. Procédé suivant l'une des revendications 6 à 9, des points de référence individuels du jeu de données de départ pouvant être déplacés uniquement à l'intérieur d'une zone prédéfinie afin de diminuer ou de minimiser la courbure.

11. Procédé suivant l'une des revendications 6 à 10, un procédé Gauss-Seidl étant utilisé pour diminuer ou minimiser la courbure.

12. Procédé suivant l'une des revendications 6 à 11, des image de coupe bidimensionnelles étant générées à partir du modèle de données continu après le déplacement.

13. Procédé suivant l'une des revendications 6 à 12, des surfaces bidimensionnelles triangulées étant générées à partir du modèle de données continu par sélection d'une valeur limite de valeur de couleur ou de niveau de gris.

14. Dispositif de génération d'une image bidimensionnelle à partir d'un jeu de données bidimensionnel de départ définissant une répartition de couleurs ou de niveaux de gris, comportant:
a) un dispositif d'introduction pour le jeu de données bidimensionnel de départ;
b) un dispositif de division en triangles des rectangles formés par les points de référence du jeu de données de départ, pour attribuer des valeurs de couleur ou des niveaux de gris à la zone intérieure des triangles par interpolation des valeurs de couleur ou des niveaux de gris aux points d'angle des triangles, afin de générer un modèle de données continu, pour déplacer les points d'angle, afin de diminuer ou de minimiser les courbures de la surface définie par la répartition des valeurs de couleur ou des niveaux de gris, le modèle de données continu étant déplacé en correspondance, et pour générer une image bidimensionnelle à partir du modèle de données continu déplacé, la surface de la projection d'un triangle en direction du gradient ou le carré mathématique de la courbure perpendiculairement à la direction du gradient ou le produit des courbures principales étant utilisés pour la détermination de la courbure; et
c) un dispositif de sortie pour la sortie de l'image bidimensionnelle générée.

15. Dispositif de génération d'un jeu de données tridimensionnel qui est décrit par une série de jeux de données bidimensionnels, comportant:
a) un dispositif d'introduction pour la série de jeux de données bidimensionnels;
b) un dispositif de génération d'un premier modèle tridimensionnel de l'espace tridimensionnel à partir de jeux de données bidimensionnels, pour diviser le modèle tridimensionnel en objets tridimensionnels, en particulier en parallélépipèdes ou en tétraèdres, qui peuvent eux-mêmes être divisés en tétraèdres ou en d'autres objets tridimensionnels, pour générer un modèle de données continu par attribution de valeurs de couleur ou de niveaux de gris à la zone intérieure des objets tridimensionnels ou des tétraèdres par interpolation des valeurs de couleur ou des niveaux de gris aux points d'angle respectifs, pour diminuer ou minimiser par déplacement des points d'angle les courbures de l'hypersurface définie par la répartition des valeurs de couleur ou des niveaux de gris, le modèle de données continu étant déplacé en correspondance, l'hypersurface de la projection d'un tétraèdre en direction du gradient ou le carré mathématique de la courbure perpendiculairement à la direction du gradient ou le produit des courbures principales étant utilisés pour la détermination de la courbure; et
c) un dispositif de sortie pour la sortie du jeu de données tridimensionnel généré.

16. Dispositif suivant l'une des revendications 14 ou 15, le dispositif de sortie étant un dispositif d'affichage.

17. Dispositif suivant l'une des revendications 14 à 16, le dispositif d'introduction étant un dispositif de réalisation d'une tomographie assistée par ordinateur, d'une prise par ultrasons ou d'un procédé de résonance magnétique nucléaire.

18. Programme d'ordinateur qui peut être chargé directement dans la mémoire interne d'un ordinateur numérique et comprend des sections de code logiciel avec lesquels les étapes suivant l'une des revendications 1 à 13 peuvent être exécutées lorsque le produit tourne sur un ordinateur.

19. Utilisation du procédé suivant l'une des revendications 1 à 13 pour la commande ou la réalisation d'une radiothérapie ou d'un procédé de radiochirurgie.

20. Utilisation du procédé suivant l'une des revendications 1 à 13 pour la localisation d'un objet ou la navigation avec un système de navigation.
